# EUROPEAN PATENT APPLICATION

(11) **EP 4 173 769 A1**
(43) Date of publication of application: **03.05.2023**
(21) Application number: 21861974.0
(22) Date of filing: 20.08.2021
(51) Int. Cl.: B25J 9/16, B25J 9/00, B25J 19/02

(54) **ROBOT AND CONTROL METHOD FOR ROBOT**

(30) Priority: 27.08.2020 KR 20200108817
(71) Applicant: Samsung Electronics Co., Ltd., Gyeonggi-do 16677 (KR)
(72) Inventor: HWANG, Sangyoung, Suwon-si Gyeonggi-do 16677 (KR); KIM, Woomok, Suwon-si Gyeonggi-do 16677 (KR); MOON, Boseok, Suwon-si Gyeonggi-do 16677 (KR)
(74) Representative: Appleyard Lees IP LLP
(86) International application number: PCT/KR2021/011090
(87) International publication number: WO 2022/045677

(57) **Abstract**

A robot includes: a communicator; a driver configured to drive the robot; at least one memory configured to store at least one instruction; and at least one processor configured to execute the at least one instruction to: receive first driving data from an external device in communication with the robot through the communicator and store the first driving data in the memory, control the driver to perform an operation based on the first driving data, identify, based on an error in communication connection between the robot and the external device occurring, second driving data received by the robot from the external device within a threshold period based on a point in time at which the error in communication connection occurs, wherein the second driving data matches with at least a portion of the first driving data, identify third driving data that is at least a portion of the first driving data and is consecutive to the portion of the first driving data that matches with the second driving data, and control the driver to perform an operation after the point in time at which the error in communication connection between the robot and the external device occurs based on the third driving data.

## Description

### [Technical Field]

The disclosure relates to a robot and a control method for the robot, and more particularly, to a robot capable of naturally continuing an operation of the robot being performed before and after an occurrence of an error even when an error in communication connection between the robot and an external device occurs, and a control method for the robot.

### CROSS-REFERENCE TO RELATED APPLICATIONS

This application claims benefit of priority to Korean Patent Application No. 10-2020-0108817, filed on August 27, 2020, in the Korean Intellectual Property Office, the disclosure of which is incorporated by reference herein in its entirety.

### [Background Art]

Robots for accommodating user convenience while travelling within a limited space such as a companion robot, a retail service robot, or the like, and robots of various types such as a walking assist robot which is attached to a body of a user are being provided to users.

In particular, when controlling the operation of a robot, driving data that is pre-stored in the robot or driving data generated from the robot itself may be used, but the driving data may be received in real-time from an external device such as a server or an edge computing device, and the operation of the robot may be controlled based on the received driving data.

However, when controlling an operation of a robot based on driving data received from the external device, there may be a problem with or a sudden-stopping in the operation of the robot caused by an error or interruption in communication between the robot and the external device, and consequently the receiving of driving data is interrupted. For example, based on an error in communication connection, a companion robot or a retail service robot may travel in a wrong direction and collide with obstacles, and a walk assist robot may cause an unintended motion of the user or injury to the user according to a malfunction or sudden-stopping.

### [Disclosure]

### [Technical Problem]

Provided is a robot for which at least a portion of the operations of the robot are controlled based on driving data received from an external device, and that the robot is able to continue normal operations despite the occurrence of an error in communication connection between the robot and an external device.

### [Technical Solution]

According to an aspect of the disclosure, a robot includes: a communicator; a driver configured to drive the robot; at least one memory configured to store at least one instruction; and at least one processor configured to execute the at least one instruction to: receive first driving data from an external device in communication with the robot through the communicator and store the first driving data in the memory, control the driver to perform an operation based on the first driving data, identify, based on an error in communication connection between the robot and the external device occurring, second driving data received by the robot from the external device within a threshold period based on a point in time at which the error in communication connection occurs, wherein the second driving data matches with at least a portion of the first driving data, identify third driving data that is at least a portion of the first driving data and is consecutive to the portion of the first driving data that matches with the second driving data, and control the driver to perform an operation after the point in time at which the error in communication connection between the robot and the external device occurs based on the third driving data.

Each of the first driving data and the second driving data may include an information on at least one parameter for controlling the driver.

The information on the at least one parameter for controlling the driver may include information on a force that is applied to the robot and information on a time at which the force is applied to the robot.

The processor may be further configured to execute the at least one instruction to identify the second driving data based on the information on the at least one parameter included in each of the first driving data and the second driving data.

The threshold period may be a period of time between the point in time at which the error in communication connection between the robot and the external device occurs and a point in time preceding, by a pre-set interval, the point in time at which the error in communication connection between the robot and the external device occurs.

The processor may be further configured to execute the at least one instruction to: identify, based on the error in communication connection between the robot and the external device continuing while the operation corresponding to the third driving data is performed, fourth driving data that is at least a portion of the first driving data that is consecutive to the third driving data, and control the driver to perform an operation after the operation corresponding to the third driving data based on the fourth driving data.

The processor may be further configured to, execute the at least one instruction to: receive, based on the error in communication connection between the robot and the external device being resolved while the operation corresponding to the fourth driving data is performed, a fifth driving data from the external device through the communicator, and control the driver to perform an operation after the error in communication connection between the robot and the external device is resolved based on the fifth driving data.

The robot may be configured to be worn on a body of a user, and the processor may be further configured to execute the at least one instruction to control the driver to perform an operation for assisting in a walk of the user while the robot is operating in a first mode, and control the driver for the robot to perform an operation for applying resistance to the walk of the user while the robot is operating in a second mode.

The robot may further include at least one sensor, and the processor may be further configured to execute the at least one instruction to control the communicator to obtain an information on a walk of the user through the at least one sensor and transmit the information on the walk of the user to the external device, and the first driving data corresponds to the information on the walk of the user.

The robot may be configured to travel, and the processor may be further configured to execute the at least one instruction to: obtain a map information including a path along which the robot moves, store the map information in the at least one memory, identify, based on an error in communication connection between the robot and the external device occurring, a position at which the robot is to stop based on the map information, and control the driver to stop after reducing speed until the position for stopping is reached.

According to an aspect of the disclosure, a method of controlling a robot, includes: receiving first driving data from an external device in communication with the robot and storing the received first driving data in a memory of the robot; controlling a driver of the robot to perform an operation based on the first driving data; identifying, based on an error in communication connection between the robot and the external device occurring, second driving data received by the robot from the external device within a threshold period based on a point in time at which the error in communication connection occurs, wherein the second driving data matches with at least a portion of the first driving data; identifying third driving data that is at least a portion of the first driving data and is consecutive to the portion of the first driving data that matches with the second driving data; and controlling the driver to perform an operation after the point in time at which the error in communication connection between the robot and the external device occurs based on the third driving data.

Each of the first driving data and the second driving data may include information on at least one parameter for controlling the driver.

The information on the at least one parameter for controlling the driver may include information on a force that is applied to the robot and information on a time at which the force is applied to the robot.

The identifying the second driving data may include identifying the second driving data based on the information on the at least one parameter for controlling the driver included in each of the first driving data and the second driving data.

The threshold period may be a period of time between the point in time at which the error in communication connection between the robot and the external device occurs and a point in time preceding, by a pre-set interval, the point in time at which the error in communication connection between the robot and the external device occurs.

The method may further include: identifying, based on the error in communication connection between the robot and the external device continuing while the operation corresponding to the third driving data is performed, fourth driving data that is at least a portion of the first driving data that is consecutive to the third driving data; and controlling the driver to perform an operation after the operation corresponding to the third driving data based on the fourth driving data.

The method may further include: receiving, based on the error in communication connection between the robot and the external device being resolved while the operation corresponding to the fourth driving data is performed, a fifth driving data from the external device; and controlling the driver to perform an operation after the error in communication connection between the robot and the external device is resolved based on the fifth driving data.

According to an aspect of the disclosure, a non-transitory computer readable medium has instructions stored therein, which are executable by a processor to perform a method of controlling a robot, the method includes: receiving first driving data from an external device in communication with the robot and storing the received driving data in a memory of the robot; controlling a driver of the robot to perform an operation based on the driving data; identifying, based on an error in communication connection between the robot and the external device occurring, second driving data received by the robot from the external device within a threshold period based on a point in time at which the error in communication connection occurs, wherein the second driving data matches with at least a portion of the first driving data; identifying third driving data that is at least a portion of the first driving data and is consecutive to the portion of the first driving data that matches with the second driving data; and controlling the driver to perform an operation after the point in time at which the error in communication connection between the robot and the external device occurs based on the third driving data.

The method may further include: identifying, based on the error in communication connection between the robot and the external device continuing while the operation corresponding to the third driving data is performed, fourth driving data that is at least a portion of the first driving data that is consecutive to the third driving data; and controlling the driver to perform an operation after the operation corresponding to the third driving data based on the fourth driving data.

The method may further include: receiving, based on the error in communication connection between the robot and the external device being resolved while the operation corresponding to the fourth driving data is performed, a fifth driving data from the external device; and controlling the driver to perform an operation after the error in communication connection between the robot and the external device is resolved based on the fifth driving data.

### [Description of Drawings]

The above and other aspects, features, and advantages of certain embodiments of the present disclosure will be more apparent from the following description taken in conjunction with the accompanying drawings, in which:
FIG. 1 is a conceptual diagram briefly illustrating a robot and an external device according to an embodiment of the disclosure;
FIG. 2 is a diagram briefly illustrating a control method for a robot according to an embodiment of the disclosure;
FIG. 3 is a diagram illustrating in detail a control process of a robot for each period according to an embodiment of the disclosure;
FIG. 4 is a diagram illustrating in greater detail a control process of a robot for each period according to an embodiment of the disclosure;
FIG. 5 is a flowchart illustrating a control process of a robot according to the disclosure after an error in communication connection between the robot and an external device occurs and the error is solved thereafter;
FIG. 6 is a block diagram illustrating a hardware configuration of a robot according to an embodiment of the disclosure;
FIG. 7 is a block diagram illustrating a software configuration according to an embodiment of the disclosure;
FIG. 8 is a diagram illustrating a control process when a robot is a walk assist robot according to an embodiment of the disclosure;
FIG. 9 is a diagram illustrating a control process when a robot is a traveling robot according to an embodiment of the disclosure; and
FIG. 10 is a diagram illustrating a control process when there is a plurality of external devices according to an embodiment of the disclosure.

### [Best Mode]

Various modifications may be made to the embodiments of the disclosure, and there may be various types of embodiments. Accordingly, specific embodiments will be illustrated in the drawings, and the embodiments will be described in detail in the detailed description. However, it should be noted that the various embodiments do not limit the scope of the disclosure to a specific embodiment, but they should be interpreted to include all modifications, equivalents or alternatives of the embodiments included in the ideas and the technical scope disclosed herein. With respect to the description of the drawings, like reference numerals may be used to indicate like elements.

Further, the embodiments below may be modified to various different forms, and it is to be understood that the scope of the technical spirit of the disclosure is not limited to the embodiments below. Rather, the embodiments are provided so that the disclosure will be thorough and complete, and to fully convey the technical spirit of the disclosure to those skilled in the art.

Terms used herein have merely been used to describe a specific embodiment, and not to limit the scope of another embodiment. A singular expression includes a plural expression, unless otherwise specified.

In the disclosure, expressions such as "have," "may have," "include," "may include," or the like are used to designate a presence of a corresponding characteristic (e.g., elements such as numerical value, function, operation, or component), and not to preclude a presence or a possibility of additional characteristics.

In the disclosure, expressions such as "A or B," "at least one of A and B," or "at least one of A or B" may include all possible combinations of the items listed together. For example, "A or B," "at least one of A and B," or "at least one of A or B" may refer to all cases including (1) only A, (2) only B, or (3) both of A and B.

Expressions such as "first," "second," "1st," "2nd," and so on used herein may be used to refer to various elements regardless of order and/or importance. Further, it should be noted that the expressions are merely used to distinguish an element from another element and not to limit the relevant elements.

When a certain element (e.g., first element) is indicated as being "(operatively or communicatively) coupled with/to" or "connected to" another element (e.g., second element), it may be understood as the certain element being directly coupled with/to the another element or as being coupled through other element (e.g., third element).

On the other hand, when a certain element (e.g., first element) is indicated as "directly coupled with/to" or "directly connected to" another element (e.g., second element), it may be understood as the other element (e.g., third element) not being present between the certain element and the another element.

The expression "configured to... (or set up to)" used in the disclosure may be used interchangeably with, for example, "suitable for...," "having the capacity to...," "designed to...," "adapted to...," "made to...," or "capable of..." based on circumstance. The term "configured to... (or set up to)" may not necessarily mean "specifically designed to" in terms of hardware.

Rather, in a certain circumstance, the expression "a device configured to..." may mean something that the device "may perform..." together with another device or components. For example, the phrase "a processor configured to (or set up to) perform A, B, or C" may mean a dedicated processor for performing a corresponding operation (e.g., embedded processor), or a generic-purpose processor (e.g., a central processing unit (CPU) or an application processor) capable of performing the corresponding operations by executing one or more software programs stored in the memory device.

The term "module" or "part" used in the embodiments herein perform at least one function or operation, and may be implemented with a hardware or software, or implemented with a combination of hardware and software. Further, a plurality of "modules" or a plurality of "parts," except for a "module" or a "part" which needs to be implemented to a specific hardware, may be integrated to at least one module and implemented in at least one processor.

The various elements and areas of the drawings have been schematically illustrated. Accordingly, the technical idea of the disclosure is not limited by relative sizes and distances illustrated in the accompanied drawings.

The embodiments of the disclosure will be described in detail with reference to the accompanying drawings to aid in the understanding of those of ordinary skill in the art.

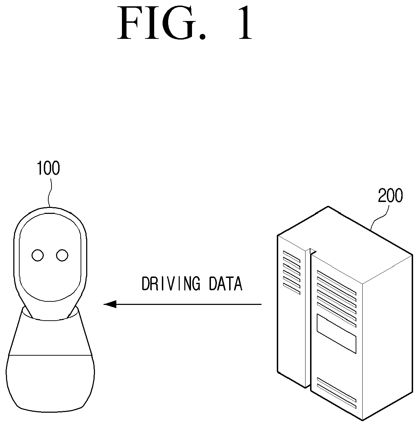

FIG. 1 is a conceptual diagram briefly illustrating a robot and an external device according to an embodiment of the disclosure.

As shown in FIG. 1, a robot 100 according to the disclosure may receive driving data from an external device 200 connected with the robot 100, and control an operation of the robot 100 based on the received driving data.

The robot 100 according to the disclosure may be implemented as a walk assist robot that may be worn on a body of a user, a service robot that provides a server to the user by travelling a limited space, or the like. However, the robot 100 according to the disclosure is not limited to a robot of a specific type, and as long as it is a robot 100 by which at least a portion from among operations of the robot 100 is controlled based on driving data received from the external device 200, it may correspond to the robot 100 according to the disclosure.

The external device 200 may be implemented as a server, an edge computing device, or the like. Here, the edge computing device may be a device for solving a data delay phenomenon, problems in security, and the like which may be generated when processing data associated with a plurality of devices through cloud computing, and may refer to a device that can perform computing at a physical position of a data source or a place close to the position. The embodiment is not limited to a type of external device 200 or to a specific type according to the disclosure, and any device that can generate and transmit driving data to control an operation of the robot 100 connected with the external device 200 may correspond to the external device 200 according to the disclosure.

The concept of the robot 100 and the external device 200 being connected may mean a state in which a communication connection is established as a result of a request for communication connection between the robot 100 and the external device 200 and a response to the request being sent. It is to be understood that there is no specific limitation to the method of communication connection according to the disclosure.

Driving data may collective refer to data for controlling an operation of the robot 100. Specifically, the driving data may refer to data configured to control the operation of the robot 100 by controlling a driver included in the robot 100. Specifically, the driving data may include information on at least one parameter for controlling the driver in a specific period. Here, the information on at least one parameter may include information on a force that is applied to the robot 100, and information on a time at which the force is applied to the robot 100. However, the information on at least one parameter is not limited thereto. The driving data may be generated by the external device 200 based on information on an operation of the robot received from the robot 100.

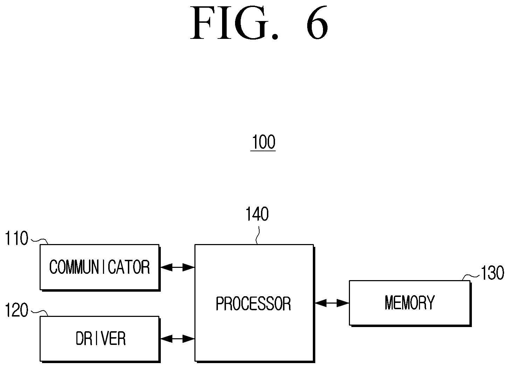

Here, the term "driver" may refer to a configuration that can generate power for realizing various operations of the robot 100 based on the driving data. Further, power generated by the driver may be transferred to a support physically coupled to the driver and may move the support, and accordingly, various operations of the robot 100 may be realized. A more detailed description on the driver and the support will be described with reference to FIG. 6, FIG. 8, and FIG. 9.

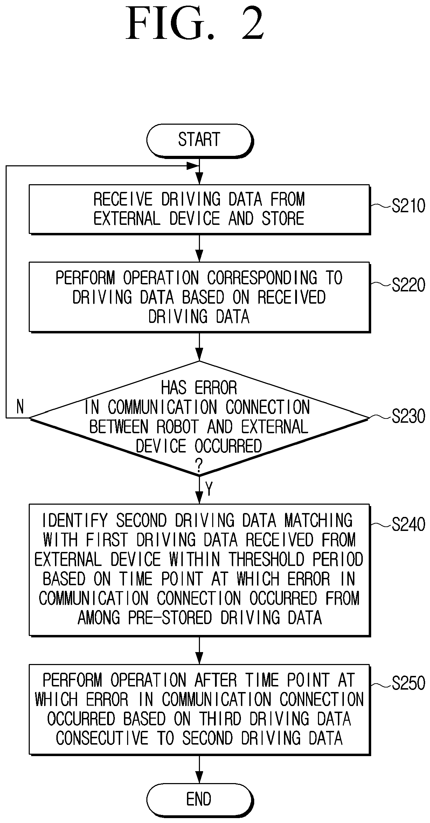

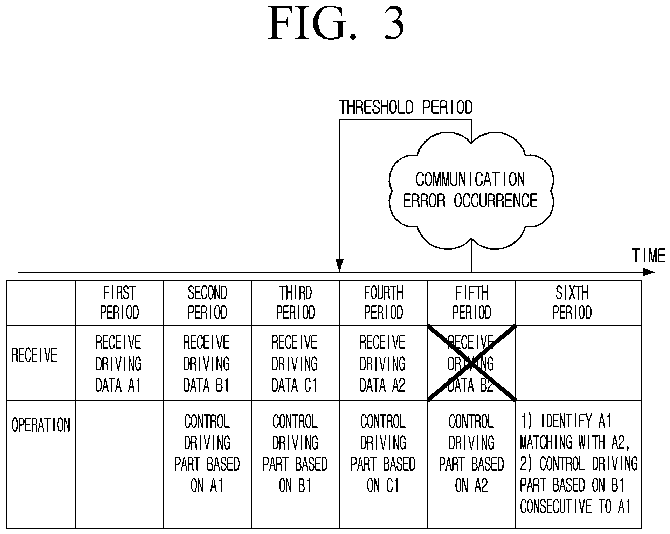

FIG. 2 is a diagram briefly illustrating a control method for a robot according to an embodiment of the disclosure. Further, FIG. 3 is a diagram illustrating in detail a control process of a robot for each period according to an embodiment of the disclosure.

As shown in FIG. 2, in an embodiment the robot 100 may receive driving data from the external device 200 connected with the robot 100, store the received driving data (S210), and perform an operation corresponding to the received driving data based on the received driving data (S220).

Specifically, a process of the robot 100 receiving driving data from the external device 200 and performing an operation corresponding to the driving data may be performed in real-time. For example, a control process according to the disclosure may be consecutively performed from a continued first period to a sixth period as shown in FIG. 3. Further, the robot 100 may receive, from the external device 200, driving data A1 during a first period for performing an operation of a second period, and receive driving data B1 during the second period for performing an operation of a third period while performing an operation in the second period based on the received driving data A1. Further, the robot 100 may receive driving data C1 during the third period for performing an operation of a fourth period while performing the operation of the third period based on the received driving data B1, and receive driving data A2 during the fourth period for performing an operation of a fifth period while performing the operation of the fourth period based on the received driving data C1. Furthermore, the robot may consecutively perform the process as described above even in the fifth period and periods following thereafter.

However, the process of the robot 100 receiving driving data from the external device 200 and performing an operation corresponding to the driving data being performed in real-time is based on the premise that there is no error or interruption in the communication connection between the robot 100 and the external device 200. That is, in the embodiment of FIG. 3, in the process of receiving driving data for performing an operation of the sixth period while performing the operation of the fifth period based on the received driving data A2, if an error in the communication connection between the robot 100 and the external device 200 has occurred, the operation of the sixth period consecutive to the fifth period may not be smoothly performed.

Accordingly, as shown in the embodiment of FIG. 2, the robot 100 may identify whether an error in the communication connection between the robot 100 and the external device 200 has occurred (S230). Here, the term "identify" may be substituted with terms such as, for example, and without limitation "check", "sense", "detect", "determine" or the like. Specifically, while an operation corresponding to the driving data is performed based on the driving data received from the external device 200, the robot 100 may continuously sense and monitor whether there is an occurrence of an error in communication connection between the robot 100 and the external device 200.

Here, the term "error in communication connection" may mean a delay, modulation, loss of data, and the like occurring in the communication connection between the robot 100 and the external device 200, and more specifically, it may mean that at least a portion of the driving data for performing an operation of a specific period is not received before the starting point in time of the specific period according to a delay, modulation, loss of data, and the like occurring.

If the error in communication connection between the robot 100 and the external device 200 has not occurred (S230-N), the robot 100 may normally receive driving data from the external device 200, and perform an operation corresponding to the driving data based on the received driving data. That is, the robot 100 may receive driving data from the external device 200 during the period in which the communication connection is normally maintained and perform the process of performing an operation corresponding to the driving data in real-time. In other words, in the example of FIG. 3, the robot 100 may smoothly perform an operation of the second period to the fifth period based on driving data received during the first period to the fourth period.

On the other hand, if an error in communication connection between the robot 100 and the external device 200 has occurred (S230-Y), the robot 100 may identify second driving data that matches with first driving data received from the external device 200 within a threshold period based on the point in time at which the error in communication connection has occurred from among pre-stored driving data (S240).

Here, the term "threshold period" may mean a period from a point in time before a pre-set time to a point in time at which an error in communication connection has occurred based on the point in time at which the error in communication connection between the robot 100 and the external device 200 has occurred. For example, if an error in communication connection has occurred in the fifth period, as show in FIG. 3, then the threshold period may be a period from a point in time at which the fourth period beings to a point in time at which an error in communication connection has occurred. However, the pre-set time may be variously set according to the embodiment.

The term "pre-stored driving data" may refer to driving data received before the threshold period as defined above, and may be considered to have a different meaning from the term "driving data received within a threshold period". That is, if the threshold period is pre-set to a period from a point in time at which the fourth period beings to a point in time at which an error in communication connection has occurred as in the example of FIG. 3, then the pre-stored driving data may be received from the external device before the point in time at which the fourth period begins and thus would include driving data A1, driving data B 1, and driving data C1 which are driving data stored in a memory, and the driving data received within the threshold period may be received from the external device from the point in time at which the fourth period begins to the point in time at which an error in communication connection has occurred and thus would include driving data A2 stored in the memory.

The process of identifying the second driving data that matches with the first driving data may be performed based on information on at least one parameter included in each of the first driving data and the second driving data.

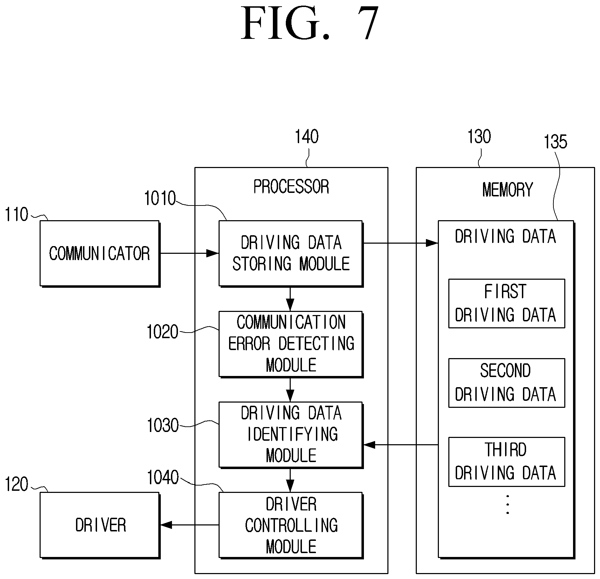

Specifically, the robot 100 may identify the second driving data that matches with the first driving data based on information on at least one parameter included in each of the first driving data and the second driving data. As described above, the information on at least one parameter may include information on a force that is applied to the robot 100 and information on a time at which the force is applied to the robot 100. Because the specific parameter may vary according to the embodiment of the robot 100, an example of the parameters of various types will be described below with reference to FIG. 6 and FIG. 7.

More specifically, the robot 100 may compare the first driving data with the second driving data, and identify that the information on at least one parameter included in the first driving data and the information on at least one parameter included in the second driving data are the same upon a comparison, or identify the second driving data as driving data that matches with the first driving data when the information on at least one parameter included in the first driving data and the information on at least one parameter included in the second driving data are identified as similar. Here, the information on at least one parameter included in the first driving data and the information on at least one parameter included in the second driving data being similar may mean that a difference between the information on at least one parameter included in the first driving data and the information on at least one parameter included in the second driving data is less than a pre-set threshold value.

Referring back to the example of FIG. 3, when an error in communication connection between the robot 100 and the external device 200 occurs in the process of receiving driving data for performing the operation of the sixth period while performing the operation of the fifth period based on driving data A2 received by the robot 100, operation during the fifth period may be smoothly performed because the driving data A2 for performing the operation of the fifth period has already been received. However, unless the driving data B2 for performing the operation of the sixth period is not received before the sixth period has begun due to the error in communication connection being resolved, the operation of the sixth period may not be smoothly performed. At this time, the robot 100 may identify, based on information on at least one parameter included in the driving data A2 received from the external device 200 within the threshold period being the same or similar to information on at least one parameter included in the driving data A1 included in the pre-stored driving data, the driving data A1 as driving data that matches with the driving data A2.

When the second driving data that matches with the first driving data is identified, the robot 100 may perform an operation after the time at which the error in communication connection has occurred based on third driving data consecutive to the second driving data (S250). Here, the third driving data may refer to driving data stored in the memory of the robot by being received at a period consecutive to the period at which the second driving data is received. In the example of FIG. 3, when the driving data A1 that matches with the driving data A2 is identified, the robot 100 may perform the operation of the sixth period based on the driving data B 1 received in the second period consecutive to the first period at which the driving data A1 is received.

As used herein, the phrase "after the point in time at which the error in communication connection has occurred" may not necessarily mean a time directly after the point in time at which the error in communication connection has occurred, and may mean a time after a following period of the period which includes the point in time at which the error in communication connection has occurred. As described above, this is because the driving data for performing an operation of a period that includes the point in time at which the error in communication connection has occurred may already be normally received before the occurrence of the error in communication connection.
According to an embodiment, even when the error in communication connection with the external device 200 has occurred while receiving driving data from the external device 200 and performing an operation of the robot 100, driving data corresponding to the driving data that is not normally received due to an error in communication connection may be identified from among the pre-stored driving data and the operation of the robot 100 may be performed based on the identified driving data. Then, according thereto, the operation of the robot 100 that is performed before and after the occurrence of the error in communication connection may be naturally continued.

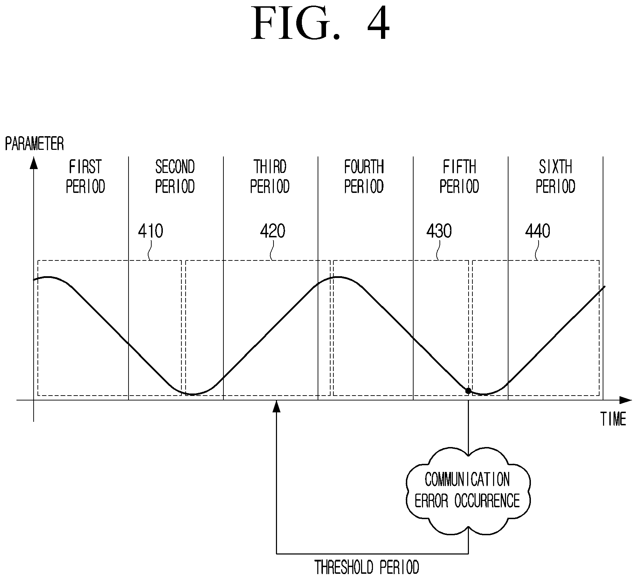

FIG. 4 is a diagram illustrating in greater detail a control process of a robot for each period according to an embodiment of the disclosure.

Specifically, FIG. 4 represents a change in size of a parameter value included in the driving data according to a flow of time by which the driving data is received in a graph to describe in greater detail the process of identifying the second driving data that matches with the first driving data. Here, the parameter may be a force that is applied to the robot 100, but may not be limited thereto.

As described above with reference to FIG. 2 and FIG. 3, the robot 100 according to the disclosure may receive driving data from the external device 200 connected with the robot 100, store the received driving data, and perform an operation corresponding thereto based on the received driving data. At this time, if an error in communication connection between the robot 100 and the external device 200 has occurred, the robot 100 may identify the second driving data that matches with the first driving data received from the external device 200 within the threshold period based on the point in time at which the error in communication connection has occurred from among the pre-stored driving data. Then, the robot 100 may perform an operation after the point in time at which the error in communication connection has occurred based on the third driving data consecutive to the second driving data.

In FIG. 3, the driving data has been described based on a premise that the driving data corresponds to each of the periods, but the disclosure is not limited thereto. That is, as shown in FIG. 4, the driving data may be divided according to a form of change in parameters that comprise the driving data. Specifically, in the embodiment of FIG. 4, the driving data may be divided into driving data 410 in which the parameter value decreases, driving data 420 in which the parameter value increases, driving data 430 in which the parameter value reduces again, and driving data 440 in which the parameter value increases again. Then, the robot 100 may perform an operation of a period that corresponds to each of the driving data 410, the driving data 420, and the driving data 430 based on the driving data 410, the driving data 420, and the driving data 430 as shown in FIG. 4.

However, if the error in communication connection between the robot 100 and the external device 200 occurs at the fifth period, the robot 100 may identify at least a portion of driving data 430 from among the driving data received from the external device 200 within the threshold period based on the point in time at which the error in communication connection has occurred from among the pre-stored driving data, and identify the pre-stored driving data that matches with the identified driving data 430. Specifically, the robot 100 may identify the driving data 410 that matches with the driving data 430 based on information on at least one parameter included in each of the driving data 410 and the driving data 430. That is, as shown in FIG. 4, when the change in size of the parameter value according to the time of the driving data 410 and the change in size of the parameter value according to the time of the driving data 430 are the same or similar, the robot 100 may identify the driving data 410 as driving data that matches with the driving data 430.

Further, the robot 100 may perform an operation after the point in time at which the error in communication connection has occurred based on the driving data 420 consecutive to the driving data 410. The driving data 440 of FIG. 4 represents that the driving data 420 may be used for performing an operation after the point in time at which an error in communication connection has occurred.

In FIG. 3 and FIG. 4, the sizes of the first period to the sixth period have been shown based on the premise that each period has the same duration, but the duration of each period may be different from one another.

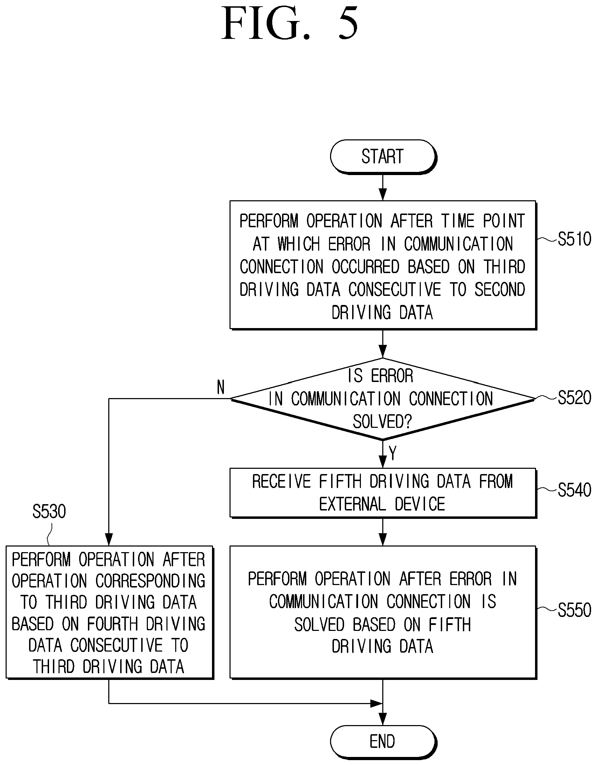

FIG. 5 is a flowchart illustrating a control process of a robot according to an embodiment after an error in communication connection between the robot and an external device occurs and the error is solved thereafter.

In the above, the control process of the robot 100 when an error in communication connection between the robot 100 and the external device 200 has occurred has been described, but the error in communication connection may be solved as long as the error in communication connection is not caused by a defect in hardware or the like. Further, if the error in communication connection between the robot 100 and the external device 200 is solved, the robot 100 may again normally receive driving data from the external device 200, and perform an operation corresponding thereto based on the received driving data.

Specifically, as described above with reference to FIG. 2, if an error in communication connection between the robot 100 and the external device 200 has occurred (S230-Y), the robot 100 may identify the second driving data that matches with the first driving data received from the external device 200 within the threshold period based on the point in time at which the error has occurred from among the pre-stored driving data (S240), and perform an operation after the point in time at which the error in communication connection has occurred based on the third driving data consecutive to the second driving data (S250, S510).

Then, if the error in communication connection is maintained while the operation corresponding to the third driving data is being performed based on the third driving data (S520-N), the robot 100 may perform an operation following the operation corresponding to the third driving data based on fourth driving data consecutive to the third driving data (S530). Here, the fourth driving data refers to driving data that is received at a period consecutive to the period at which the third driving data is received and is stored in the memory of the robot 100.

That is, in the example described above with reference to FIG. 3, if the driving data A1 that matches with the driving data A2 is identified, the robot 100 may perform an operation of the sixth period based on the driving data B1 received in the second period consecutive to the first period at which the driving data A1 is received, and if the error in communication connection is maintained while the operation of the sixth period is being performed, an operation of a seventh period may be further performed based on the driving data C1 received at the third period.

If the error in communication connection between the robot 100 and the external device 200 is solved (S520-Y), the robot 100 may receive fifth driving data from the external device 200 (S530). Then, the robot 100 may perform an operation after the error in communication connection is solved based on the received fifth driving data (S540).

That is, in the example described above with reference to FIG. 3, if driving data C2 for performing an operation of the seventh period consecutive to the sixth period is received from the external device 200 while the operation of the sixth period is being performed based on the driving data B1 consecutive to the driving data A1, the robot 100 may perform the operation of the seventh period based on the received driving data C2.

FIG. 6 is a block diagram illustrating a hardware configuration of a robot according to an embodiment of the disclosure.

As shown in FIG. 6, the robot 100 according to the disclosure may include a communicator 110, a driver 120, a memory 130, and a processor 140. However, the configurations described above are examples, and in realizing the disclosure, a new configuration may be added or some configurations may be omitted in addition to the configurations described above.

The communicator 110 may include circuitry, and perform communication with the external device 200. Specifically, the processor 140 may receive various data or information from the external device 200 connected through the communicator 110, and also transmit various data or information to the external device 200.

The communicator 110 may include at least one from among a WiFi module, a Bluetooth module, a wireless communication module, and a near field communication (NFC) module. Specifically, each of the WiFi module and the Bluetooth module may perform communication in a WiFi method and a Bluetooth method. When using the WiFi module or the Bluetooth module, various connection information such as service set identifier (SSID) may be first transmitted and received, and various information may be transmitted and received after performing communication connection using the various connection information.

In addition, the wireless communication module may perform communication according to various communication standards such as, for example, and without limitation, IEEE, ZigBee, 3rd generation (3G), 3rd generation partnership project (3GPP), long term evolution (LTE), 5th generation (5G), or the like. Further, the NFC module may perform communication with a NFC method using a 13.56 MHz band from among the various radiofrequency identification (RFID) frequency bands such as, for example, and without limitation, 135 kHz, 13.56 MHz, 433 MHz, 860-960 MHz, 2.45 GHz, or the like.

Specifically, according to the various embodiments of the disclosure, the communicator 110 may perform communication with the external device 200 and receive driving data from the external device 200, and also transmit information on a walk of a user to the external device 200.

The driver 120 may refer to a configuration of components which can generate power for realizing various operations of the robot 100 based on the driving data. Further, the power generated by the driver 120 may be transferred to a support physically coupled to the driver 120 and may move the support, and accordingly, various operations of the robot 100 may be realized.

Specifically, the driver 120 may include a motor which generates a rotational force of a predetermined torque based on electric energy that is supplied to the robot 100, and may also include a piston or cylinder device that generates a rotational force based on hydraulic pressure or air pressure that is supplied to the robot 100. Further, the support may include a plurality of joints and a plurality of articulations that couple the plurality of joints, and in addition thereto, may be implemented to various shapes so as to perform the various operations of the robot 100. The robot 100 according to the disclosure may include a plurality of drivers 120 or a plurality of supports. Further, the configurations of the driver 120 and the support are not limited to a specific number.

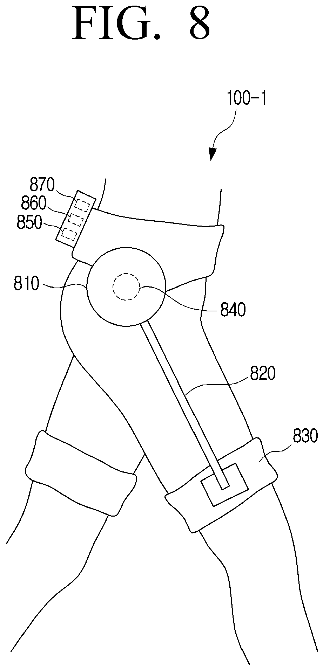

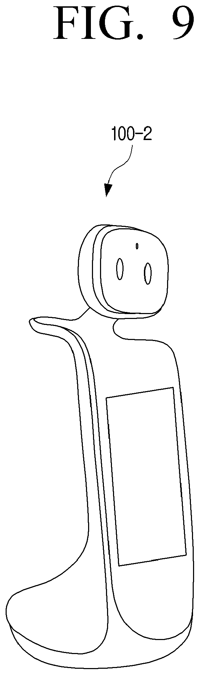

Specifically, according to the various embodiments of the disclosure, the driver 120 may be disposed at various positions in various types and various numbers according to a type of the robot 100. Specifically, the configuration of the driver 120 according to the type of the robot 100 will be described below with reference to FIG. 8 and FIG. 9.

In the memory 130, at least one instruction associated with an electronic device may be stored. Further, an operating system (O/S) for driving the robot 100 may be stored in the memory 130. In addition, in the memory 130, various software programs or applications for operating the robot 100 may be stored according to the various embodiments of the disclosure. Further, the memory 130 may include a semiconductor memory such as a flash memory, a magnetic storage medium such as a hard disk, or the like.

Specifically, the memory 130 may be stored with various software modules for the robot 100 to operate according to the various embodiments of the disclosure, and the processor 140 may execute the various software modules stored in the memory 130 and control the operation of the robot 100. That is, the memory 130 may be accessed by the processor 140 and reading/writing/modifying/deleting/updating of data may be performed by the processor 140.

In the disclosure, the term "memory" may include the memory 130, a read only memory (ROM) in the processor 140, a random access memory (RAM), or a memory card (e.g., a micro SD card, a memory stick) mounted to the robot 100.

Specifically, according to the various embodiments of the disclosure, the driving data received from the external device 200 may be stored in the memory 130, and information on the walk of the user obtained through at least one sensor may be stored.

In addition thereto, various information necessary for achieving the object of the disclosure may be stored in the memory 130, and the information stored in the memory may be received from a server or the external device 200 or updated according via user input.

The processor 140 may control the overall operation of the robot 100. Specifically, the processor 140 may be connected with a configuration of the robot 100 including the communicator 110, the driver 120, and the memory 130 as described above, and by executing at least one instruction stored in the memory 130 as described above, control the overall operation of the electronic device.

The processor 140 may be implemented in various methods. For example, the processor 140 may be implemented as at least one from among an application specific integrated circuit (ASIC), an embedded processor, a microprocessor, a hardware control logic, a hardware finite state machine (FSM), and a digital signal processor (DSP). In the disclosure, the term "processor" may include a central processing unit (CPU), a graphic processing unit (GPU), a main processing unit (MPU), and the like.

Specifically, according to the various embodiments of the disclosure, the processor 140 may receive the driving data from the external device 200 connected with the robot 100 through the communicator 110, store the received driving data 135 in the memory 130, control the driver 120 such that the robot 100 performs an operation corresponding to the driving data based on the driving data, and if an error in communication connection occurs between the robot 100 and the external device 200, identify the second driving data that matches with the first driving data received from the external device 200 within the threshold period based on the point in time at which the error in communication connection has occurred from among the driving data 135 pre-stored in the memory 130, and control the driver 120 such that the robot 100 performs an operation after the point in time at which the error in communication connection has occurred based on the third driving data consecutive to the second driving data.

Because the various embodiments of the disclosure are based on the control of robot 100 by processor 140 as described above with reference to FIG. 1 to FIG. 5, redundant descriptions will be omitted.

An embodiment of the robot 100 may further include at least one sensor, an input device, and an output device. Specifically, the at least one sensor may sense information of a movement of the robot 100 or information of an environment outside the robot 100, the input device may include at least one from among a microphone, a camera, and a remote controller signal receiving part, and the processor 140 may receive a user command for controlling an operation of the robot 100 through the input device. Further, the output device may include at least one from among a display, a speaker, and an indicator, and the processor 140 may output various functions that can be performed by the robot 100 through the output device.

FIG. 7 is a block diagram illustrating a software configuration according to an embodiment of the disclosure.

As shown in FIG. 7, the robot 100 according to the disclosure may include a driving data storing module 1010, a communication error detecting module 1020, a driving data identifying module 1030, and a driver controlling module 1040. Further, the processor 140 may perform, based on the driving data 135 stored in the memory 130, various control processes according to the disclosure through the driving data storing module 1010, the communication error detecting module 1020, the driving data identifying module 1030, and the driver controlling module 1040.

The driving data storing module 1010 may refer to a module which stores the driving data 135 received from the external device 200 in the memory 130. Specifically, when the driving data is received from the external device 200 through the communicator 110, the driving data storing module 1010 may store the received driving data 135 in one area of the memory 130. Then, the processor 140 may control the driver 120 to perform an operation of the robot 100 corresponding to the driving data based on the driving data 135 stored in the memory 130.

The communication error detecting module 1020 may refer to a module that senses whether an error in communication connection has occurred between the robot 100 and the external device 200. Specifically, while an operation corresponding to the driving data is being performed based on the driving data 135 received from the external device 200, the robot 100 may continuously sense whether the error in communication connection has occurred between the robot 100 and the external device 200, and transmit information according to the sensed result to the driving data identifying module 1030.

The driving data identifying module 1030 may refer to a module that identifies driving data that matches with the driving data received from the external device 200 within a threshold period from among the driving data 135 that is pre-stored in the memory 130. Specifically, the driving data identifying module 1030 may identify the driving data for performing an operation of a specific period from among the driving data 135 pre-stored in the memory 130, and transmit information according to the identified result to the driver controlling module 1040. For example, if information that an error in communication connection has occurred between the robot 100 and the external device 200 is received from the communication error detecting module 1020, the driving data identifying module 1030 may identify the second driving data that matches with the first driving data received from the external device 200 within a threshold period based on the point in time at which the error in communication connection has occurred from among the pre-stored driving data, and transmit information according to the identified result to the driver controlling module 1040.

The driver controlling module 1040 may refer to a module that controls the driver 120 based on the driving data. Specifically, when information on the driving data for performing an operation of a specific period is transmitted from the driving data identifying module 1030, the driver controlling module 1040 may control the driver 120 based on the driving data for performing the operation of the specific period. For example, when information on the second driving data that matches the first driving data is received from the driving data identifying module 1030, the driver controlling module 1040 may control the driver 120 to perform an operation after the point in time at which the error in communication connection has occurred based on the third driving data consecutive to the second driving data.

In the above, a configuration of the software module according to the disclosure has been described with reference to FIG. 7, but this is merely one embodiment, and may be implemented in method different from that shown in FIG. 7.

FIG. 8 is a diagram illustrating a control process when a robot is a walk assist robot according to an embodiment of the disclosure.

As described above, although there is no specific limit in the type of the robot 100 according to the disclosure, the robot 100 according to the disclosure may be implemented as, specifically, a walk assist robot 100-1. The walk assist robot 100-1 may refer to the robot 100 that is worn on a body of a user to assist the walking of the user. Specifically, as shown in FIG. 8, the walk assist robot 100-1 may include a driver 810, a support 820, a thigh belt 830, at least one sensor 840, a communicator 850, a memory 860, and a processor 870. In FIG. 8, although the driver 810, the support 820, and the thigh belt 830 disposed at a right side of a leg of the user have been shown, the driver 810, the support 820, and the thigh belt 830 may be disposed at a left side of the leg of the user. Descriptions that overlap with the descriptions described with reference to FIG. 6 have been omitted below, and will be described mainly as the robot 100 according to the disclosure being implemented as the walk assist robot 100-1.

The driver 810 may refer to a configuration that can generate power for performing various operations of the walk assist robot 100-1 based on driving data. Specifically, the driver 810 may include a motor that generates a rotational force of a predetermined torque based on electric energy that is supplied to the robot 100. Then, the power generated by the driver 810 may be transferred to the support 820 physically coupled to the driver 810, and further transferred to a lower body of the user through the thigh belt 830 connected to the support 820.

Here, the force that is transferred to the lower body of the user may be applied to a direction corresponding to a direction that the legs of the user are moving, or applied to a direction that is opposite to the direction that the legs of the user are moving. That is, the walk assist robot 100-1 according to the disclosure may operate in a first mode (assist mode) that performs an operation for assisting the walk of the user and in a second mode (exercise mode) that performs an operation for applying resistance to the walk of the user.

Specifically, the direction of force that is transferred to the right left of the user at the time the user is walking may be a direction opposite to the direction of force that is transferred to the left leg of the user to correspond to a walking operation of the user. That is, the direction of force applied to the right leg and the left leg of the user when the user is walking may be applied in opposite directions from each other to correspond to the walking operation of the user. Then, motions of each of the right leg and the left leg of the user may have a certain walking pattern according to a movement of the user when the user is walking, and accordingly, the size and direction of force that is applied to each of the right leg and the left leg of the user by the robot 100 may also have a certain pattern that corresponds to the walking pattern of the user. For example, the size of force that is applied to each of the right leg and the left leg of the user by the robot 100 when the user is walking may have a certain pattern as shown in FIG. 4.

The at least one sensor 840 may sense information on the walk of the user when the user is walking. Here, "information on the walk of the user" may include information on at least one from among angles of both hip joints of the user when the user is walking, difference in both hip joint angles, and movement direction of both hip joints. In addition, the information on the walk of the user may include information on an acceleration rate when the user is walking, information on a landing point of a user foot when the user is walking, and the like. That is, in the disclosure, the information on the walk of the user may be used as a term for collectively referring to all information associated with the motion of the legs of the user when the user is walking.

As described above with reference to FIG. 6, the communicator 850 may perform communication with the external device 200 and receive the driving data from the external device 200, and also transmit the information on the walk of the user to the external device 200. Then, the memory 860 may store the driving data (for example, as driving data 13 5) received from the external device 200 and the information on the walk of the user obtained through the at least one sensor 840.

The processor 870 may be connected with the driver 810, the communicator 850, and the memory 860, and control an operation of the walk assist robot 100-1. Specifically, the processor 870 may obtain the information on the walk of the user through the at least one sensor 840. Then, when the information on the walk of the user is obtained, the processor 870 may control the communicator 850 to transmit the information on the walk of the user to the external device 200. When the driving data corresponding to the information on the walk of the user is received from the external device 200 through the communicator 850, the processor 870 may control an operation of the walk assist robot 100-1 based on the received driving data.

Specifically, the processor 870 may control the driver 810 such that a predetermined force is applied in a direction corresponding to a direction that the legs of the user are moving based on the driving data corresponding to the walk of the user while the walk assist robot 100-1 is operating in the first mode, and control the driver 810 such that a predetermined force is applied in a direction opposite to a direction that the legs of the user are moving based on the driving data corresponding to the walk of the user while the walk assist robot 100-1 is operating in the second mode.

The processor 870 may realize various embodiments consistent with those described above through FIG. 1 to FIG. 7. Specifically, the processor 870 may receive the driving data from the external device 200 connected with the walk assist robot 100-1 through the communicator 850 and store in the memory 860, and control the driver 810 for the walk assist robot 100-1 to perform an operation corresponding to the driving data based on the driving data. Then, if an error in communication connection between the walk assist robot 100-1 and the external device 200 occurs, the processor 870 may identify the second driving data that matches with the first driving data received from the external device 200 within a threshold period based on the point in time at which the error has occurred from among the driving data pre-stored in the memory 860, and control the driver 810 for the robot 100 to perform an operation after the point in time at which the communication error has occurred based on the third driving data consecutive to the second driving data.

For example, the processor 870 may control the driver 810 such that a predetermined force is applied in the direction corresponding to the direction the legs of the user are moving while the walk assist robot 100-1 is operating in the first mode. At this time, if an error in communication connection between the walk assist robot 100-1 and the external device 200 occurs, the processor 870 may identify driving data that corresponds to the driving data that is not normally received due to the error in communication connection from among the driving data pre-stored in the memory 860 and control the driver 810 such that a predetermined force is applied in the direction corresponding to the direction that the legs of the user are moving based on the identified driving data. Accordingly, despite the error in communication connection having occurred, the operation in the first mode that is performed before and after the occurrence of the error in communication connection may be naturally continued.

In addition, the processor 870 may control the driver 810 such that a predetermined force is applied in the direction opposite to the direction that the legs of the user are moving while the walk assist robot 100-1 is operating in the second mode. At this time, if an error in communication connection between the walk assist robot 100-1 and the external device 200 occurs, the processor 870 may identify driving data that corresponds to the driving data that is not normally received due to the error in communication connection from among the driving data pre-stored in the memory 860 and control the driver 810 such that a predetermined force is applied in the direction opposite to the direction that the legs of the user are moving based on the identified driving data. Accordingly, despite the error in communication connection having occurred, the operation in the second mode that is performed before and after the occurrence of the error in communication connection may be naturally continued.

FIG. 9 is a diagram illustrating a control process when a robot is a traveling robot according to an embodiment of the disclosure.

The robot 100 according to the disclosure may be implemented as the walk assist robot 100-1 as shown in FIG. 8, but may also be implemented as a traveling robot 100-2 as shown in FIG. 9. The traveling robot 100-2 according to the disclosure may refer to a robot that travels a path from a current position to a destination. For example, the traveling robot 100-2 according to the disclosure may include not only a companion robot or a retail service robot that travels within a limited indoor space, but also a road traveling robot 100-2 and the like that travels an outdoor space. In an embodiment, the traveling robot 100-2 may include a driver, wheels, a communicator, a memory, and a processor. Descriptions that overlap with the descriptions described with reference to FIG. 6 will be omitted below, and will be described mainly as the robot according to the disclosure being implemented as the traveling robot (100-2).

The driver may generate a rotational force based on electric energy that is supplied to the robot, and the rotational force may be transferred to the wheels. Then, the traveling robot 100-2 may move from its current position to a destination by the rotation of the wheels.

Then, the processor may receive the driving data from the external device 200 connected with the traveling robot 100-2 through the communicator, store the driving data in the memory, and control the driver for the traveling robot 100-2 to perform an operation corresponding to the driving data based on the driving data. Then, when an error in communication connection between the traveling robot 100-2 and the external device 200 occurs, the processor may identify the second driving data that matches with the first driving data received from the external device 200 within a threshold period based on the point in time at which the error has occurred from among the driving data pre-stored in the memory, and control the driver for the robot to perform an operation after the point in time at which the communication has occurred based on the third driving data consecutive to the second driving data.

For example, if the error in communication connection between the traveling robot 100-2 and the external device 200 occurs while the traveling robot 100-2 is travelling the path from its current position to a destination based on the driving data received from the external device 200, the processor may identify driving data that corresponds to the driving data that is not normally received due to the error in communication connection from among the driving data pre-stored in the memory, and control the driver for the traveling robot 100-2 to arrive at the destination even after the point in time at which the error in communication connection has occurred based on the identified driving data.

In addition, if the error in communication connection between the traveling robot 100-2 and the external device 200 occurs while the traveling robot 100-2 is traveling the path from its current position to a destination based on the driving data received from the external device 200, the processor may identify driving data that corresponds to the driving data that is not normally received due to the error in communication connection from among the driving data pre-stored in the memory, and control the driver for the traveling robot 100-2 to safely reduce speed and stop after the point in time at which the error in communication connection has occurred based on the identified driving data.

The processor may obtain information on the path while the traveling robot 100-2 is moving along the path, and generate map information based therefrom and store in the memory. Further, if the error in communication connection between the traveling robot 100-2 and the external device 200 occurs while the traveling robot 100-2 is travelling the path from its current position to a destination based on the driving data received from the external device 200, the processor may identify a position at which the robot is to stop based on a pre-stored map information, and control the driver for the traveling robot 100-2 to after reducing speed until it reaches a position for stopping.

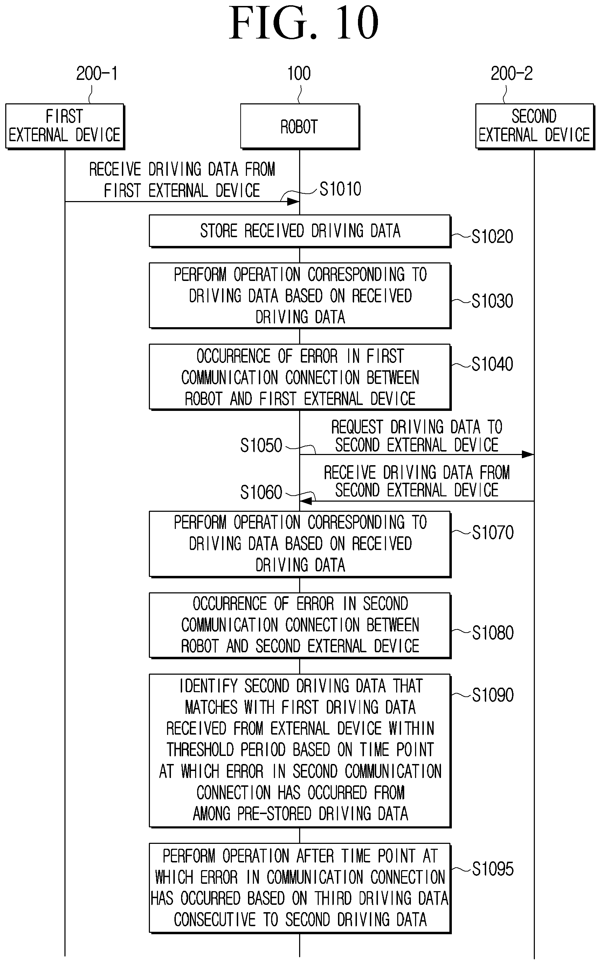

FIG. 10 is a diagram illustrating a control process when there is a plurality of external devices according to an embodiment of the disclosure.

In the above, the disclosure has been described assuming that the external device 200 is singular, but the external device 200 according to the disclosure may be in plurality. Specifically, a plurality of external devices 200 according to the disclosure may include a first external device 200-1 which is an edge computing device for processing data that requires speed and a second external device 200-2 which is a cloud computing device for processing data that requires a high level of processing. Further, the robot 100 may perform various operations using at least a portion from among the driving data received from the first external device 200-1 and the driving data received from the second external device 200-2.

Specifically, as shown in FIG. 10, the robot 100 may receive the driving data from the first external device 200-1 (S1010) and store the received driving data (S1020). Then, the robot 100 may perform an operation corresponding to the driving data based on the driving data received from the first external device 200-1 (S1030).

At this time, if an error in a first communication connection between the robot 100 and the first external device 200-1 does not occur, the robot 100 may receive driving data from the first external device 200-1 and perform, in real-time, a process of performing the operation corresponding to the driving data. On the other hand, if an error in the first communication connection between the robot 100 and the first external device 200-1 occurs (S1040), the robot 100 may request driving data to the second external device 200-2 (S1050). Then, when the driving data is received from the second external device 200-2 (S1060), the robot 100 may perform an operation corresponding to the driving data based on the driving data received from the second external device 200-2 (S1070).

In this case, if an error in a second communication connection between the robot 100 and the second external device 200-2 does not occur, the robot 100 may receive driving data from the second external device 200-2 and perform, in real-time, a process of performing the operation corresponding to the driving data. Additionally, even if an error in the second communication connection between the robot 100 and the second external device 200-2 occurs, if the error in the first communication connection between the robot 100 and the first external device 200-1 is solved, the robot 100 may receive the driving data from the second external device 200-2 and perform, in real-time, the process of performing the operation corresponding to the driving data.

However, if an error in the second communication connection between the robot 100 and the second external device 200-2 occurs (S1080) while the error in the first communication connection between the robot 100 and the first external device 200-1 is not solved, the robot 100 may identify the second driving data that matches with the first driving data received from the external device within a threshold period based on the point in time at which the error in the second communication connection has occurred from among the pre-stored driving data (S 1090), and perform an operation after the point in time at which the error in communication connection has occurred based on the third driving data consecutive to the second driving data (S1095).

In the above, an embodiment of when the external device according to the disclosure is in plurality has been described with reference to FIG. 10, but the disclosure is not limited thereto. That is, the various embodiments of the disclosure as described above with reference to FIG. 1 to FIG. 9 may be applied alike when the external device according to the disclosure is in plurality.

The control method for the robot 100 according to an embodiment described in the above may be implemented with a program and provided to the robot 100. Specifically, the program which includes the control method for the robot 100 may be stored in a non-transitory computer readable medium and provided.

Specifically, in terms of a computer readable recording medium which includes a program that executes the control method for the robot 100, the control method of the robot 100 includes receiving driving data from the external device connected with the robot 100 and storing the received driving data, controlling the driver of the robot 100 for the robot 100 to perform an operation corresponding to the driving data based on the driving data, identifying, based on an error in communication connection between the robot 100 and the external device occurring, the second driving data that matches with the first driving data received from the external device within a threshold period based on the point in time at which the error in communication connection has occurred from among the pre-stored driving data, and controlling the driver for the robot 100 to perform an operation after the point in time at which the error in communication connection has occurred based on the third driving data consecutive to the second driving data.

The non-transitory computer readable medium may refer to a medium that stores data semi-permanently rather than storing data for a very short time, such as a register, a cache, a memory, or the like, and is readable by a device. Specifically, the above-described various applications or programs may be stored in the non-transitory computer readable medium such as, for example, and without limitation, a compact disc (CD), a digital versatile disc (DVD), a hard disc, a Blu-ray disc, a USB, a memory card, a ROM, and the like, and provided.

In the above, although the control method for the robot 100 and the computer readable recording medium that includes the program for executing the control method for the robot 100 have been briefly described, this is merely to omit redundant descriptions, and the various embodiments of the robot 100 may also be applied to the control method for the robot 100, and the computer readable recording medium that includes the program for executing the control method for the robot 100.

The machine-readable storage medium may be provided in the form of a non-transitory storage medium. Herein, "non-transitory" merely means that the storage medium is a tangible device, and does not include a signal (e.g., electromagnetic waves), and the term does not differentiate data being semi-permanently stored or being temporarily stored in the storage medium. For example, the "non-transitory storage medium" may include a buffer in which data is temporarily stored.

According to an embodiment, a method according to the various embodiments may be provided included in a computer program product. The computer program product may be exchanged between a seller and a purchaser as a commodity. The computer program product may be distributed in the form of a machine-readable storage medium (e.g., a compact disc read only memory (CD-ROM)), or distributed online (e.g., downloaded or uploaded) through an application store (e.g., PLAYSTORE^{™}) or directly between two user devices (e.g., smartphones). In the case of online distribution, at least a portion of the computer program product (e.g., downloadable app) may be at least stored temporarily in a server of a manufacturer, a server of an application store, or a storage medium such as a memory of a relay server, or temporarily generated.

According to the various embodiments of the disclosure as described above, even when an error in the communication connection with the external device 200 is generated while the operation of the robot 100 is performed by receiving driving data from the external device 200, driving data corresponding to the driving data that is not normally received due to the error in communication connection is identified from among the pre-stored driving data, and the operation of the robot 100 may be performed based on the identified driving data. Then, according thereto, the operation of the robot 100 that is performed before and after the occurrence of the error in communication connection may be continued naturally.

Each of the elements (e.g., a module or a program) according to various embodiments may be formed as a single entity or a plurality of entities, and some sub-elements of the abovementioned sub-elements may be omitted, or different sub-elements may be further included in the various embodiments. Alternatively or additionally, some elements (e.g., modules or programs) may be integrated into one entity to perform the same or similar functions performed by the respective elements prior to integration.

Operations performed by a module, a program, or another element, in accordance with various embodiments, may be executed sequentially, in a parallel, repetitively, or in a heuristic manner, or at least some operations may be executed in a different order, omitted or a different operation may be added.

The term "part" or "module" used in the disclosure may include a unit configured as a hardware, software, or firmware, and may be used interchangeably with terms such as, for example, and without limitation, logic, logic blocks, components, circuits, or the like. "Part" or "module" may be a component integrally formed or a minimum unit or a part of the component performing one or more functions. For example, a module may be configured as an application-specific integrated circuit (ASIC).

The various embodiments may be implemented with software including instructions stored in a machine-readable storage media (e.g., computer). The machine may call an instruction stored in the storage medium, and as a device operable according to the called instruction, may include the robot 100 according to the above-mentioned embodiments.

Based on the instruction being executed by the processor, the processor may directly or using other elements under the control of the processor perform a function corresponding to the instruction. The instruction may include a code generated by a compiler or executed by an interpreter.

While the disclosure has been illustrated and described with reference to various example embodiments thereof, it will be understood that the various example embodiments are intended to be illustrative, not limiting. It will be understood by those skilled in the art that various changes in form and details may be made therein without departing from the true spirit and full scope of the disclosure, including the appended claims and their equivalents.

## Claims

1. A robot comprising:
a communicator;
a driver configured to drive the robot;
at least one memory configured to store at least one instruction; and
at least one processor configured to execute the at least one instruction to:
receive first driving data from an external device in communication with the robot through the communicator and store the first driving data in the memory,
control the driver to perform an operation based on the first driving data,
identify, based on an error in communication connection between the robot and the external device occurring, second driving data received by the robot from the external device within a threshold period based on a point in time at which the error in communication connection occurs, wherein the second driving data matches with at least a portion of the first driving data,
identify third driving data that is at least a portion of the first driving data and is consecutive to the portion of the first driving data that matches with the second driving data, and
control the driver to perform an operation after the point in time at which the error in communication connection between the robot and the external device occurs based on the third driving data.

2. The robot of claim 1, wherein each of the first driving data and the second driving data comprises an information on at least one parameter for controlling the driver.

3. The robot of claim 2, wherein the information on the at least one parameter for controlling the driver comprises information on a force that is applied to the robot and information on a time at which the force is applied to the robot.

4. The robot of claim 2, wherein the processor is further configured to execute the at least one instruction to identify the second driving data based on the information on the at least one parameter comprised in each of the first driving data and the second driving data.

5. The robot of claim 1, wherein the threshold period is a period of time between the point in time at which the error in communication connection between the robot and the external device occurs and a point in time preceding, by a pre-set interval, the point in time at which the error in communication connection between the robot and the external device occurs.

6. The robot of claim 1, wherein the processor is further configured to execute the at least one instruction to:
identify, based on the error in communication connection between the robot and the external device continuing while the operation corresponding to the third driving data is performed, fourth driving data that is at least a portion of the first driving data that is consecutive to the third driving data, and
control the driver to perform an operation after the operation corresponding to the third driving data based on the fourth driving data.

7. The robot of claim 6, wherein the processor is further configured to, execute the at least one instruction to:
receive, based on the error in communication connection between the robot and the external device being resolved while the operation corresponding to the fourth driving data is performed, a fifth driving data from the external device through the communicator, and
control the driver to perform an operation after the error in communication connection between the robot and the external device is resolved based on the fifth driving data.

8. The robot of claim 1, wherein the robot is configured to be worn on a body of a user, and
wherein the processor is further configured to execute the at least one instruction to:
control the driver to perform an operation for assisting in a walk of the user while the robot is operating in a first mode, and control the driver for the robot to perform an operation for applying resistance to the walk of the user while the robot is operating in a second mode.

9. The robot of claim 8, further comprising at least one sensor,
wherein the processor is further configured to execute the at least one instruction to:
control the communicator to obtain an information on a walk of the user through the at least one sensor and transmit the information on the walk of the user to the external device, and
wherein the first driving data corresponds to the information on the walk of the user.

10. The robot of claim 1, wherein the robot is configured to travel, and the processor is further configured to execute the at least one instruction to:
obtain a map information comprising a path along which the robot moves,
store the map information in the at least one memory,
identify, based on an error in communication connection between the robot and the external device occurring, a position at which the robot is to stop based on the map information, and
control the driver to stop after reducing speed until the position for stopping is reached.

11. A method of controlling a robot, the method comprising:
receiving first driving data from an external device in communication with the robot and storing the received first driving data in a memory of the robot;
controlling a driver of the robot to perform an operation based on the first driving data;
identifying, based on an error in communication connection between the robot and the external device occurring, second driving data received by the robot from the external device within a threshold period based on a point in time at which the error in communication connection occurs, wherein the second driving data matches with at least a portion of the first driving data;
identifying third driving data that is at least a portion of the first driving data and is consecutive to the portion of the first driving data that matches with the second driving data; and
controlling the driver to perform an operation after the point in time at which the error in communication connection between the robot and the external device occurs based on the third driving data.

12. The method of claim 11, wherein each of the first driving data and the second driving data comprises information on at least one parameter for controlling the driver.

13. The method of claim 12, wherein the information on the at least one parameter for controlling the driver comprises information on a force that is applied to the robot and information on a time at which the force is applied to the robot.

14. The method of claim 12, wherein the identifying the second driving data comprises identifying the second driving data based on the information on the at least one parameter for controlling the driver included in each of the first driving data and the second driving data.

15. The method of claim 11, wherein the threshold period is a period of time between the point in time at which the error in communication connection between the robot and the external device occurs and a point in time preceding, by a pre-set interval, the point in time at which the error in communication connection between the robot and the external device occurs.
